Europäisches Patentamt

(19) European Patent Office

Office européen des brevets

(11) Numéro de publication: **0 143 690**
**B1**

(12) **FASCICULE DE BREVET EUROPEEN**

(51) Int. Cl.⁴: **B 64 C 25/52**, B 64 C 25/58,
E 04 C 3/29

(45) Date de publication du fascicule du brevet:
**07.01.88**

(21) Numéro de dépôt: **84402190.7**

(22) Date de dépôt: **31.10.84**

(54) Poutre flexible à forte absorption d'énergie, et trains d'atterrissage et béquille arrière d'aérodyne équipés d'une telle poutre.

(30) Priorité: **02.11.83 FR 8317394**

(43) Date de publication de la demande:
**05.06.85 Bulletin 85/23**

(45) Mention de la délivrance du brevet:
**07.01.88 Bulletin 88/1**

(84) Etats contractants désignés:
**DE GB IT**

(56) Documents cités:
**Néant**

(73) Titulaire: **AEROSPATIALE Société Nationale
Industrielle, 37, Boulevard de Montmorency,
F-75781 Paris Cédex 16 (FR)**

(72) Inventeur: **Coffy, René Louis, 13, Rue des Lauriers,
F-13960 Sausset les Pins (FR)**

(74) Mandataire: **Lepeudry-Gautherat, Thérèse et al,
ARMENGAUD JEUNE CABINET LEPEUDRY 6, rue du Fg.
St-Honoré, F-75008 Paris (FR)**

**Description**

La présente invention se rapporte à une poutre flexible à forte absorption d'énergie, réalisée en matériaux composites, ainsi qu'à des trains d'atterrissage, en particulier à patins, et à une béquille arrière pour aérodynes, notamment à voilure tournante, tels que les hélicoptères, qui sont équipés d'une telle poutre destinée à absorber l'énergie d'impact à l'atterrissage de l'aérodyne.

On sait que les trains d'atterrissage ont pour fonctions essentielles d'absorber, aux atterrissages, l'énergie cinétique provenant de la vitesse d'impact des aérodynes, et de supporter des derniers au-dessus du niveau du sol après l'atterrissage et jusqu'au décollage suivant, tandis que les béquilles arrières ont pour fonction de protéger la structure arrière des aérodynes qui en sont équipés, lors d'atterrissage trop cabrés de ces derniers, en évitant que la structure arrière ne vienne en contact avec le sol, et en corrigeant l'attitude trop cabrée de l'aérodyne. En général, les béquilles arrières d'hélicoptère sont réalisées à partir d'un tube métallique, par exemple en acier, dont une extrémité est agencée afin d'être fixée sous la structure arrière de l'hélicoptère, et dont l'autre extrémité est libre, cintrée et aplatie, et est destinée à venir en contact avec le sol lors de touchés au sol, en approche trop cabrée de l'hélicoptère. La béquille est articulée dans un plan vertical et se trouve rappelée vers une position initiale, ou de repos, vers le bas, par une contrefiche élastique à amortisseur intégré, capable d'absorber l'énergie d'impact à des vitesses verticales de chute relativement grandes, pouvant atteindre 3 m/s, de dissiper une partie relativement importante de cette énergie absorbée, et de n'en transmettre à la structure arrière de l'aérodyne qu'une partie supportable sans dommage par cette structure et permettant de corriger l'attitude trop cabrée de l'aérodyne.

En ce qui concerne les trains d'atterrissage, on sait qu'ils ne doivent pas restituer en totalité l'énergie absorbée à l'atterrissage, afin d'éviter les rebonds de l'aérodyne. Une partie de l'énergie est absorbée au niveau des organes de contact avec le sol, tels que des roues, équipées de pneumatiques, des patins ou des skis, et une autre partie de l'énergie est absorbée par la déformation des jambes d'atterrisseur reliant les organes de contact avec le sol au fuselage, la partie restante de l'énergie étant, le cas échéant, absorbée par des dispositifs amortisseurs, lorsque de tels dispositifs équipent les atterrisseurs.

Afin de simplifier et d'alléger la structure des atterrisseurs des aérodynes légers, il est bien connu de réaliser les jambes d'atterrisseurs de telle sorte qu'elles constituent elles-mêmes des dispositifs amortisseurs. Il en est ainsi, par exemple, des avions légers, dont les roues des atterrisseurs principaux sont reliées au fuselage par des traverses constituées par plusieurs lames métalliques superposées, et agencées comme des ressorts à lames multiples, ainsi que des hélicoptères légers à trains à patins. De tels trains à patins comprennent généralement deux patins latéraux, constitués chacun par un tube métallique, reliés l'un à l'autre par une traverse avant et une traverse arrière, constituées chacune également par un tube métallique, ayant sensiblement la forme d'un arceau un U renversé, dont la base est solidarisée à la structure du fuselage et sous ce dernier, par deux organes de liaison disposés de part et d'autre de la partie centrale de la base.

Dans cette réalisation, une partie de l'énergie d'impact est absorbée par le frottement et/ou glissement latéral, sur le sol, des patins qui s'écartent l'un de l'autre, tandis que la partie restante de l'énergie d'impact est absorbée par la déformation des traverses du train.

Dans le cas d'un atterrissage «normal», c'est-à-dire qui se produit avec une vitesse d'impact comprise dans une enveloppe de vitesse donnée, et en particulier avec une composante verticale de vitesse inférieure à un seuil prédéterminé, l'énergie cinétique est essentiellement absorbée par la déformation élastique des traverses du train. Par contre, dans le cas d'un atterrissage «dur», c'est-à-dire avec une vitesse d'impact qui est au-delà de l'enveloppe de vitesse donnée, l'énergie d'impact est absorbée par une déformation plastique des traverses et/ou des patins, qui ne doit pas aller jusqu'à la rupture de ces éléments.

Il en résulte cependant une déformation permanente des traverses et/ou des patins, ce qui conduit à une durée de vie limitée du train d'atterrissage, et donc à des travaux importants, répétés et coûteux de réparation ou de remplacement de ces éléments.

En effet, comme l'énergie absorbée par déformation élastique n'est qu'une fraction de l'énergie absorbée par déformation plastique, si l'on souhaite que les déformations soient limitées au domaine élastique pour des vitesses verticales d'atterrissage normalement élevées, il faut surdimentionner le train à patin, ce qui est pénalisant sur le plan du poids.

Par contre, si l'on adopte un train de faible poids, le seuil de vitesse pour lequel il se produit des déformations permanentes est très faible, de sorte que le train est rapidement inutilisable.

Afin de remédier aux inconvénients que présentent les trains à patins et à traverses métalliques, sur les plans du poids et des déformations irréversibles, il a déjà été proposé, par le brevet francais FR-A-1272208, d'utiliser en tant que patins de planeur ou d'hélicoptère des éléments élastiques en matière synthétique et en forme de barre, permettant une forte absorption d'énergie. Ces éléments en forme de barre comportent une membrure supérieure et une membrure inférieure, destinées à absorber les efforts de traction ou de compression et réalisées en matière synthétique dans laquelle sont noyées des mèches de fibre de verre, ainsi que des parois de poussée reliant les deux membrures et constituées de renforts en fibre de verre inclinées à 45° sur la direction de l'axe de la barre, ces renforts étant noyés dans la matière synthétique et étant reliés aux membrures. La barre ainsi constituée présente donc sensiblement la forme d'un caisson allongé, garni intérieurement d'un noyau plein en un matériau de faible poids spécifique, tel qu'un matériau synthétique en mousse à cellules fermées, afin d'augmenter la rigidité des parois.

Il a également été déjà proposé, par le brevet français FR-A-1296381, des atterrisseurs à patins pour hélicoptère léger comportant des jambes fixées au fuselage, portant des patins et consistant en une matière stratifiée très élastique, par exemple une matière synthétique armée de fibres mais dont la rupture se produit sans déformation plastique préalable, les jambes étant agencées de telle sorte que les patins s'écartent en glissant sur le sol, à l'atterrissage.

Enfin, il est connu de réaliser en montage élastique des jambes d'atterrisseur sur les organes de liaison au fuselage de l'aérodyne. Un tel montage est décrit dans le brevet des Etats-Unis d'Amérique US-A-2539817, qui se rapporte à un dispositif de skis pour train d'atterrissage d'avion léger, dans lequel les jambes portant les skis sont élastiquement montées par des manchons élastiques logés dans des douilles solidaires des jambes et dans lesquelles sont engagés des axes solidarisés à la structure du fuselage.

Si les réalisations en matériaux composites faisant l'objet des deux brevets français précités présentent bien l'avantage d'un gain de masse important par rapport aux trains à patins métalliques, il n'en reste pas moins qu'en raison de l'absence de limite élastique propre des matériaux composites, l'énergie cinétique due à l'impact est absorbée par la déformation élastique des patins et/ou des jambes des trains, pour tous les cas d'atterrissage. Dans ces conditions, le faible rendement d'absorption d'énergie des matériaux composites conduit, pour conserver le même rendement que les trains métalliques, soit à admettre les mêmes déformations que sur les trains métalliques, avec pour conséquence une augmentation de l'effort qui est transmis par le train à la structure du fuselage, soit à admettre des déformations plus importantes, afin que l'effort transmis à la structure du fuselage soit sensiblement le même que sur les trains métalliques, avec pour conséquence un assouplissement de la structure du train, et donc une augmentation du risque que les jambes et/ou les patins du train ne s'effondrent ou ne se rompent avant d'avoir absorbé l'énergie d'impact.

Par la présente invention, on se propose de remédier aux inconvénients présentés ci-dessus, et l'invention a pour objet une poutre flexible en matériaux composites et à forte absorption d'énergie, destiné en particulier à l'équipement des trains d'atterrissage et des béquilles arrières d'aérodyne, la poutre offrant un rendement d'absorption d'énergie élevé, qui permet une diminution des efforts transmis par la poutre à une structure à laquelle elle est associée, par exemple la structure du fuselage de l'aérodyne, et donc, dans cette application particulière aux trains d'atterrissage, une augmentation des vitesses verticales de l'aérodyne à l'atterrissage sans endommagement ni dégradation des performances des différents composants des atterrisseurs, grâce à la dissipation d'une partie importante de l'énergie absorbée par la poutre flexible selon l'invention. Bien entendu, cette dernière conserve les avantages propres aux réalisations stratifiées en matériaux composites à fibres minérales et/ou synthétiques et à matrice synthétique de l'état de la technique, par rapport aux réalisations métalliques, à savoir un gain de masse important et la réversibilité des déformations.

A cet effet, la poutre flexible en matériaux composites et à forte absorption l'énergie selon l'invention, qui a sensiblement la forme d'un caisson allongé de structure stratifiée comprenant deux semelles rigides reliées par deux voiles se caractérise en ce qu'elle comprend de plus au moins un plot déformable d'absorption l'énergie, disposé entre les deux semelles et comportant au moins un bloc d'un matériau élastomère à forte rémanence de déformation, le plot étant destiné, lors d'une déformation en flexion de la poutre dans une direction sensiblement perpendiculaire aux semelles, à absorber l'énergie de déformation en flambage de celle des semelles qui est sollicitée en compression, en prenant appui sur l'autre semelle sollicitée en traction, et à contrôler le flambage de la semelle comprimée, les caractéristiques d'amortissement du plot entraînant, au retour de la poutre en position normale, une restitution partielle de l'énergie absorbée.

Dans une telle poutre, les semelles confèrent la rigidité et la résistance à la poutre, tandis que les voiles transmettent les efforts tranchants, et le ou les plots permettent donc de contrôler et de retenir le flambage de la zone comprimée de la poutre, et d'absorber et de dissiper de l'énergie, de sorte que la poutre permet d'obtenir une saturation des efforts transmis à une structure à laquelle la poutre est associée.

Avantageusement, l'un au moins des plots, et de préférence chacun des plots, est disposé entre deux ajours ménagés chacun dans l'un des voiles de la poutre et en regard l'un de l'autre, ce qui simplifie la réalisation au niveau du montage du ou des plots, et l'un au moins des plots, mais de préférence chacun d'eux, est disposé dans la partie centrale de la poutre, afin de tendre vers une distribution sensiblement symétrique des efforts dans la poutre.

Il est avantageux que l'un au moins des plots, mais de préférence chacun d'eux, présente une caractéristique de raideur croissante en fonction de sa déformation, afin d'optimiser la combinaison du ou des plots à amortissement énergétique élevé avec les matériaux composites stratifiés sans limite élastique des semelles et des voiles de la poutre.

Dans un mode de réalisation d'une grande simplicité, l'un au moins des plots, mais de préférence chacun d'eux, comprend au moins deux armatures rigides, métalliques ou en matériaux composites, dont l'une au moins est solidarisée à l'une des semelles, et entre lesquelles est monté au moins un élément en caoutchouc synthétique à fort taux d'hystérésis.

Chaque plot peut être déformé par une sollicitation en compression, voire en traction, ou en cisaillement, ou par un compromis entre des différents modes de déformation.

Selon un premier exemple de réalisation, de structure simple, l'un au moins des plots, mais de préférence chacun d'eux, est constitué par un bloc de matériaux élastomères en forme de corps de révolution autour d'un axe sensiblement perpendiculaire aux semelles, et dont les deux faces d'extrémité adhèrent chacune à l'une des deux armatures, elles-mêmes solidaires chacune de l'une des deux semelles, la face latérale du corps de révolution étant convace.

Mais il est également possible que chaque plot soit d'une structure lamifiée, et selon un second exemple de réalisation, l'un au moins des plots, mais de préférence chacun d'eux, est constitué par un empilement alterné de lamelles de matériau élastomère et d'armatures, les lamelles ayant chacune la forme d'un corps de révolution autour d'un axe sensiblement perpendiculaire aux semelles et étant sensiblement coaxiales par rapport à cet axe, chaque lamelle adhérant par ses deux faces d'extrémité à deux armatures voisines de l'empilement ou à une semelle et à l'armature voisine de l'empilement, et la face latérale de chaque lamelle étant au moins partiellement concave. On peut ainsi limiter ou mieux contrôler la déformation de chaque lamelle, et en donnant à ces dernières des dimensions axiales (épaisseur) et/ou transversales égales ou qui varient par exemple progressivement d'une extrémité à l'autre de l'empilement, on peut donner aux plots une caractéristique de raideur adaptée à l'application particulière envisagée.

Dans un troisième exemple de réalisation, afin d'améliorer la solidarisation des lamelles aux armatures et de guider la déformation des lamelles, chaque lamelle présente une partie cylindrique entourée par un collet d'une armature et adhérant à ce collet, ainsi qu'une partie concave adjacente à la face d'extrémité adhérant à une armature voisine ou à une semelle.

Selon un quatrième exemple de réalisation, dans lequel le matériau élastomère est sollicité en cisaillement, l'un au moins des plots, mais de préférence chacun d'eux, présente une structure tubulaire d'axe sensiblement perpendiculaire aux semelles et comprend plusieurs armatures tubulaires, qui, prises deux à deux successivement, sont partiellement engagées l'une dans l'autre, chaque armature étant reliée à l'armature dans laquelle elle est engagée et/ou à l'armature qui est engagée dans elle par une couronne de matériau élastomère adhérant par ses faces interne et externe aux surfaces latérales respectivement externe et interne des deux armatures voisines correspondantes.

L'amortissement assuré par la poutre flexible peut être encore amélioré, sans que son poids s'en trouve trop augmenté, si la poutre comprend de plus au moins un amortisseur visco-élastique, monté sur la face externe de la semelle sollicitée en traction par la déformation en flexion de la poutre, et dont l'amortissement s'ajoute á celui qui est assuré par chaque plot d'absorption d'énergie.

Dans une forme de réalisation simple et avantageuse, un amortisseur visco-élastique au moins, mais de préférence chacun d'eux, comprend deux ensembles lamifiés disposés symétriquement de part et d'autre d'un plot et comportant chacun au moins une armature interne solidarisée, par son extrémité la plus éloignée du plot, à la semelle sollicitée en traction, et reliée à chacune de deux armatures externes entre lesquelles elle s'étend, par une lamelle de matériau élastomère sollicitée en cisaillement par les déformations en flexion de la poutre, les armatures externes des deux ensembles lamifiés étant rigidement reliées les unes aux autres.

Une telle poutre légère, flexible et à forte absorption d'énergie est plus particulièrement destinée à entrer dans la réalisation de trains d'atterrissage pour aérodynes, du type comprenant des organes de contact avec le sol, tels que des roues et/ou des patins et/ou des skis, reliés au fuselage de l'aérodyne par au moins une jambe d'atterrisseur, et l'invention se rapporte également à de tels trains d'atterrissage, qui se caractérisent en ce que l'une au moins des jambes comprend au moins une poutre selon l'invention.

Dans ces conditions, l'effort vertical d'impact transmis au fuselage par la ou les poutres est écrété et reste sensiblement constant lors de la déformation d'ensemble des jambes, les poutres fonctionnant en limiteur d'effort.

Dans le cadre de cette application, l'invention se rapporte plus particulièrement à un train d'atterrissage pour aérodyne à voilure tournante, tel qu'un hélicoptère, dont les organes de contact avec le sol sont deux patins latéraux, et dont les jambes d'atterrisseur sont constituées par une traverse avant et une traverse arrière, reliant les deux patins l'un à l'autre, et ayant chacune la forme d'un arceau sensiblement en U renversé dont la base est solidarisée à la structure du fuselage par deux organes de liaison disposés de part et d'autre de la partie centrale de la base, ce train se caractérisant en ce que chacune des deux traverses est constituée par une poutre selon l'invention, dont les deux semelles sont sensiblement à l'aplomb l'une au-dessus de l'autre, la semelle supérieure étant comprimée à l'atterrissage et déformée en flambage entre les deux organes de liaison au fuselage. Dans une forme de réalisation simple, les deux voiles de chaque traverse sont ajourés dans la partie centrale de la traverse, laquelle comporte un unique plot d'absorption d'énergie disposé entre les deux organes de liaison de cette traverse au fuselage.

Les voiles des traverses peuvent avoir une forme simple, et présenter par exemple une section transversale en forme de U s'ouvrant vers l'extérieur de la traverse, et dont la base est sensiblement perpendiculaire aux deux semelles. Mais, si l'on souhaite donner aux traverses une section profilée, en partant de la forme proposée ci-dessus, chaque traverse comprend avantageusement un corps avant de section transversale sensiblement semi-circulaire, et un corps arrière de section transversale ogivale, qui sont respectivement solidarisés contre le voile avant et contre le voile arrière de la traverse correspondante afin de lui donner une section profilée.

Il est également possible que l'une des traverses au moins, mais de préférence chacune d'elles, présente une section transversale sensiblement ovale délimitée par un voile avant convexe vers l'avant et par un voile arrière convexe vers l'arrière de la traverse, et qui se raccordent respectivement aux bords avant et aux bords arrière des deux semelles.

Afin d'obtenir un train d'atterrissage présentant un gain de poids important par rapport aux trains d'atterrissage à patins et à traverses en tube d'acier, chaque traverse est solidaire par chacune de ses deux extrémités de l'un des deux patins de structure stratifiée et réalisés en matériaux composites.

Des poutres flexibles selon l'invention peuvent également équiper des atterrisseurs principaux à roues pour avions légers, en remplacement des traverses à lames métalliques généralement montées sur ces atterrisseurs, par exemple, ou encore entrer dans la réalisation d'une béquille arrière de protection de la structure arrière d'un hélicoptère lors des atterrissages trop cabrés, et l'invention a enfin pour objet une béquille de ce type, comprenant un organe allongé dont une extrémité est destinée à être fixée à la structure arrière de l'aérodyne, et dont l'autre extrémité est libre et cintrée, et est destinée à entrer en contact avec le sol et/ou à supporter un organe de contact avec le sol, lors des atterrissages trop cabrés de l'aérodyne, et la béquille de protection selon l'invention se caractérise en ce que l'organe allongé comprend au moins une poutre selon l'invention.

L'invention sera mieux compris à l'aide d'exemples de réalisation, décrits ci-après à titre non limitatif, en référence aux dessins annexés dans lesquels:

La fig. 1 est une vue en perspective d'un train d'atterrissage à patins pour hélicoptère léger;

la fig. 2 est une vue schématique partielle, en coupe par un plan vertical et transversal passant par la traverse avant, du train d'atterrissage de la fig. 1, équipé d'un amortisseur visco-élastique supplémentaire, et dans la position qu'il occupe, à l'atterrissage, au moment où les patins entrent en contact avec le sol, ou au décollage, juste avant que les patins ne quittent le sol;

la fig. 3 est une vue analogue à la fig. 2, représentant le train à patins à l'atterrissage, quelques instants après la venue des patins en contact avec le sol;

la fig. 4 est une vue schématique partielle, en coupe par le même plan que les fig. 2 et 3, illustrant le mode de fonctionnement d'une poutre flexible constituant une traverse d'un train à patins tel que celui représenté sur les fig. 1 à 3;

les fig. 5, 6 et 7 sont des courbes représentant l'effort de sollicitation en flexion ou en compression respectivement d'une poutre de traverse selon la fig. 4 sans plot d'absorption d'énergie, d'un plot d'absorption d'énergie, et d'une poutre de traverse selon la fig. 4 avec son plot d'absorption d'énergie;

les fig. 8 et 9 sont des vues analogues à la fig. 4 pour une poutre de traverse équipée d'un amortisseur visco-élastique supplémentaire, du type qui équipe un train d'atterrissage tel que représenté sur les fig. 2 et 3, et respectivement dans les conditions de charge des fig. 2 et 3;

les fig. 10, 11 et 12 sont des vues schématiques de variantes de réalisation du plot d'absorption d'énergie;

les fig. 13 et 14 représentent des coupes transversales de deux variantes de réalisation de poutres de traverse, prises dans une partie des poutres qui n'est ni la partie centrale ajourée, ni une extrémité de liaison à un patin, et

la fig. 15 représente schématiquement la partie arrière d'un hélicoptère équipée d'une béquille de protection selon l'invention.

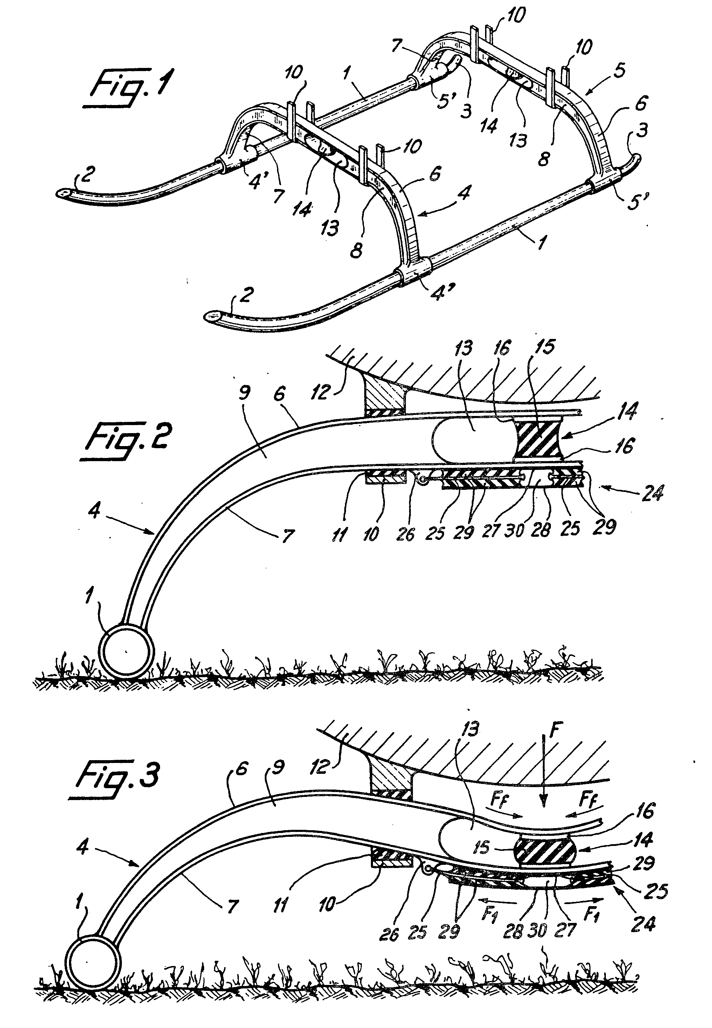

En référence à la fig. 1, le train d'atterrissage à patins pour hélicoptère léger comprend deux patins latéraux 1, ayant la forme de tubes légèrement cintrés d'un même côté à leurs deux extrémités 2 et 3, et réalisés selon une structure stratifiée en matériaux composites à fibres minérales et/ou synthétiques à haute résistance mécanique noyées dans une matrice synthétique. Ces patins 1 sont par exemple réalisés à l'aide de bandes de tissu de fibres de carbone, de verre, ou du matériau commercialisé sous le nom de marque de Kevlar, agglomérées dans une résine époxyde.

Entre leurs extrémités cintrées à l'avant 2 et à l'arrière 3, les deux patins 1 sont reliés l'un à l'autre par une traverse avant 4 et par une traverse arrière 5, qui, dans cet exemple, sont identiques. Chacune de ces deux traverses 4 et 5 est constituée par une poutre flexible comprenant une semelle supérieure 6 et une semelle inférieure 7, qui sont reliées l'une à l'autre par un voile avant 8 et un voile arrière 9. Ce dernier n'est pas visible sur la fig. 1 mais apparait sur les fig. 2 à 4, 8, 9 et 13. Les poutres de traverse 4 et 5 ont une structure en caisson stratifié en matériaux composites également à fibres synthétiques ou minérales noyées dans une matrice synthétique, et elles peuvent également être réalisées, comme les patins 1, avec des bandes de tissu de fibres de carbone, de verre ou de Kevlar agglomérées dans une résine époxyde.

Les deux voiles 8 et 9 de chaque poutre de traverse 4 et 5 s'étendent essentiellement dans les plans verticaux perpendiculaires à l'axe longitudinal de symétrie de l'hélicoptère, et chaque poutre de traverse 4 et 5 a la forme d'un arceau en U renversé. Les semelles 6 et 7 confèrent la rigidité et la résistance aux poutres de traverse 4 et 5 tandis que les voiles 8 et 9 assurent la transmission des efforts tranchants entre les deux semelles. Chaque traverse 4 et 5 est destinée à être fixée rigidement, et de manière amovible, à la structure du fuselage 12 de l'hélicoptère par deux organes de liaison 10, qui peuvent être de tout type convenable connu, par exemple à embases solidaires de ferrures structurales du fuselage et à brides métalliques boulonnées sur les embases en enserrant deux parties latérales de la base de l'arceau ou partie centrale horizontale des traverses 4 et 5 dans des évidements complémentaires de forme correspondante, avec interposition d'une garniture de protection en caoutchouc d'élastomère 11. Dans la partie centrale de chaque traverse 4 et 5, entre les deux organes 10 de liaison au fuselage correspondants, les deux voiles 8 et 9 de chaque traverse 4 et 5 sont ajourés et chaque traverse 4 et 5 présente ainsi un évidement central transversal 13.

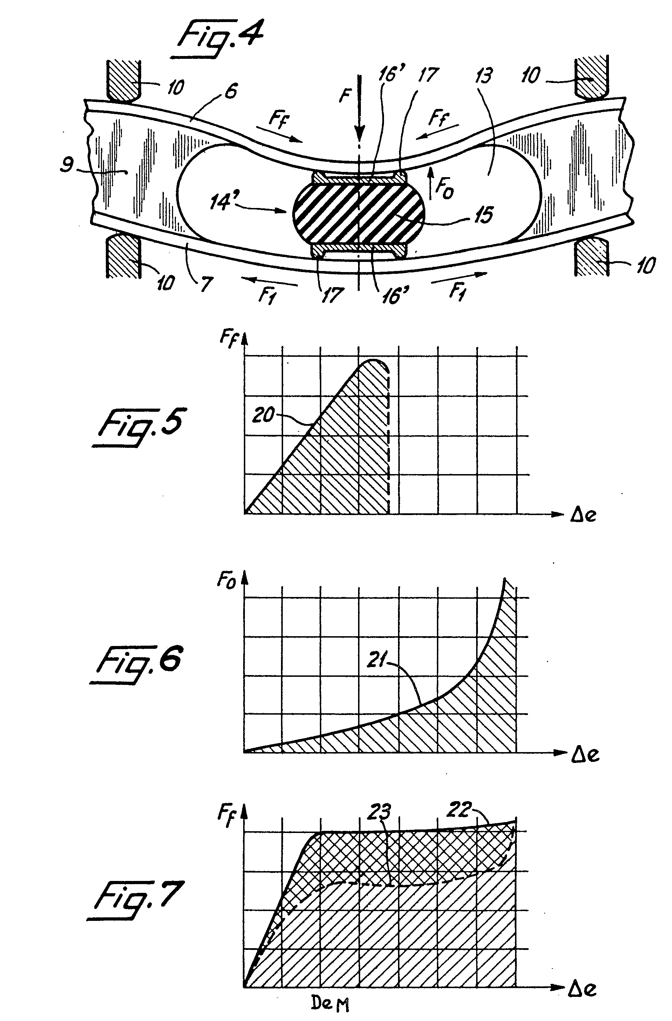

Dans cet évidement central 13 est disposé un plot d'absorption d'énergie 14, constitué comme cela est représené sur les fig. 2 et 3, par un bloc déformable d'un matériau synthétique 15 à forte rémanence de déformation fixé entre deux armatures rigides 16 également réalisées en matériaux composites stratifiés. Le matériau synthétique est par exemple un caoutchouc d'élastomère à fort taux d'hystérésis, et le bloc de caoutchouc 15 à la forme générale d'un cylindre de section circulaire à surface latérale légèrement concave, dont les faces planes d'extrémités supérieure et inférieure adhèrent par vulcanisation ou collage, respectivement à la face plane inférieure de l'armature 16 supérieure et à la face plane supérieure de l'armature 16 inférieure. Les deux armatures 16 ont chacune la forme d'un disque circulaire plat et l'armature 16 supérieure est rigidement fixée par sa face plane supérieure à la face inférieure ou interne de la semelle supérieure 6, tandis que l'armature 16 inférieure est rigidement fixée par sa face plane inférieure à la face supérieure ou interne de la semelle inférieure 7.

La poutre de traverse flexible en stratifié de matériaux composites qui est représentée sur la fig. 4, et dont les appuis aux niveaux des organes de liaison ont été très schématiquement indiqués, comporte un plot 14' dont les armatures rigides 16' ne sont en appui contre les faces internes des semelles 6 et 7 que par des nervures latérales 17.

Lorsque deux poutres de traverse telles que celle de la fig. 4 équipent un train d'atterrissage à patins tel que celui de la fig. 1, à l'atterrissage, lors de l'impact des patins 1 sur le sol, les patins 1 transmettent aux traverses 4 et 5 des efforts qui font fléchir ces dernières, sous l'effet d'une charge verticale F (voir la fig. 4) due au poids de l'hélicoptère. Il en résulte que les deux patins 1 s'écartent latéralement l'un de l'autre en glissant sur le sol, et que par la déformation en flexion de chacune des poutres de traverse 4 et 5, la semelle inférieure 7 de chaque poutre 4 et 5 est sollicitée par une traction $F_1$, tandis que la semelle supérieure 6 est sollicitée par une compression $F_f$ et se déforme en flambage. En prenant appui sur la semelle inférieure 7, le plot 14', qui est écrasé et se déforme sous la compression en absorbant de l'énergie, exerce sur la semelle supérieure 6 une réaction $F_0$ qui s'oppose à la charge F. Le plot 14' remplit donc une fonction de contrôle et de retenue du flambage de la semelle supérieure 6 comprimée, et une fonction d'absorption de l'énergie de déformation en flambage de cette semelle supérieure 6, en s'appuyant sur la semelle inférieure 7 tendue.

Sur la fig. 5, on a représenté par la courbe 20 l'évolution de l'effort de compression $F_f$ de la semelle supérieure 6 en fonction de la déformation en flambage $\Delta e$ de cette semelle 6, dans une poutre telle que celle représentée sur la fig. 4, mais ne comportant pas de plut d'absorption d'énergie 14 dans la partie centrale ajourée 13 de cette poutre. On constate que l'effort $F_f$ croît régulièrement avec le flambage $\Delta e$ puis, peu après le passage par un effort maximum, la semelle supérieure 6 casse sous l'effort de compression, ce qui est représenté par les pointillés.

Sur la fig. 6, on a représenté par la courbe 21 l'évolution de l'effort de réaction $F_0$ opposé par un plot d'absorption d'énergie 14' à une effort qui le comprime axialement, en fonction de l'écrasement ou de la diminution de hauteur $\Delta e$ de ce plot 14' sous l'effort de compression. On constate que le plot 14' présente une caractéristique de raideur qui croît en fonction de sa déformation, c'est-à-dire que la pente de la courbe 21 augmente avec la déformation $\Delta e$.

Il en résulte, pour une poutre équipée de son plot d'absorption d'énergie 14', et telle que représentée sur la fig. 4, une évolution de l'effort de compression $F_f$ en fonction de la déformation en flambage e telle que celle qui est représentée par la courbe 22 sur la fig. 7. Cette courbe 22 montre qu'après une déformation $\Delta e_M$ l'effort transmis au fuselage 12 est sensiblement constant et saturé à une valeur que la structure du fuselage peut encaisser sans dommage, lors de la déformation d'ensemble des arceaux flexibles que constituent les deux poutres de traverse. En effet, les caractéristiques d'amortissement du plot 14', fixé à la partie centrale d'une part de la semelle supérieure 6, qui flambe progressivement et, d'autre part, de la semelle inférieure 7, assurent un rendement d'absorption énergétique élevé, comme cela est également représenté sur la fig. 7. Sur cette figure, l'énergie cinétique provenant de la vitesse d'impact de l'hélicoptère, et absorbée à l'atterrissage, est représentée par la surface délimitée à l'atterrissage, est représentée par la surface délimitée entre la courbe 22 et l'axe des déformations $\Delta e$, tandis que l'énergie dissipée par la poutre et son plot 14' correspond à la surface comprise entre les deux courbes 22 et 23, et que l'énergie restituée correspond à la différence de ces deux surfaces, c'est-à-dire à la surface délimitée entre la courbe 23 et l'axe de déformation $\Delta e$, si l'on fait abstraction de l'énergie dissipée par le frottement des patins 1 sur le sol, lorsqu'ils s'écartent latéralement l'un de l'autre. On obtient bien ainsi une poutre de traverse qui absorbe l'essentiel de l'énergie d'impact par sa déformation élastique, qui en dissipe une proportion importante et n'en restitue, au retour en position normale, qu'une partie limitée afin d'éviter les rebonds, sans déformation permanente de la traverse pour tous les cas d'atterrissage, et qui permet une diminution des efforts transmis à la structure de l'hélicoptère et une augmentation de la traverse 4 ou 5. En plus de ces avantages essentiels, on remarque que la poutre de traverse 4 ou 5 ainsi réalisée reste d'une grande simplicité de réalisation et permet un gain de poids important par rapport aux trains d'atterrissage à patins et traverses métalliques, cet allègement pouvant atteindre 35 kg, par exemple, pour un hélicoptère léger destiné au transport de 5 passagers.

L'amortissement assuré par une poutre de traverse ainsi constituée peut encore être amélioré si l'on adjoint à la structure déjà décrite un amortisseur visco-élastique tel que 24 sur les fig. 2 et 3. Cet amortisseur 24, monté sous la partie centrale ajourée en 13 de la poutre de traverse 4 ou 5, présente une structure lamifiée comportant deux ensembles symétriques montés de part et d'autre du plot d'absorption d'énergie 14. Chacun de ces deux ensembles est constitué d'une plaque d'armature centrale rigide 25, en matériaux composites en fibres minérales et/ou synthétiques noyées dans une matrice en résine synthétique, qui est montée pivotante par son extrémité la plus éloignée de l'autre ensemble et du plot 14 sur une patte de fixation 26 solidaire de la face inférieure de la semelle inférieure 7. Cette plaque d'armature centrale 25 s'étend, avec un espacement, entre deux plaques d'armature externes rigides, également réalisées en matériaux composites, dont l'une 27 est adjacente à la semelle inférieure 7, et dont l'autre 28 s'étend sous la plaque d'armature centrale 25. Cette dernière est reliée à chacune des deux plaques d'armature 27 et 28 par une lamelle 29 de matériau élastomère, qui est de préférence le même que celui qui est utilisé pour réaliser le bloc 15 du plot 14. Chacune des lamelles 29 adhère par l'une de ses deux faces planes opposées à la plaque d'armature centrale 25 et par son autre face plane à l'une des plaques d'armature externes 27 et 28, soit par collage soit par vulcanisation. Les deux plaques d'armature externes 27 et 28 sont communes aux deux ensembles lamifiés symétriques, c'est-à-dire que chacune des deux plaques d'armature externes 27 et 28 de l'empilement lamifié est reliée à chacune des deux plaques d'armature internes 25 par une lamelle 29, les quatre lamelles 29 et les deux plaques d'armature internes 25 de l'amortisseur visco-élastique 24 délimitant un évidement 30 entre les deux plaques d'armature externes 27 et 28 et entre les deux ensembles symétriques de cet amortisseur. Sur la fig. 2, l'amortisseur visco-élastique 24 est représenté dans sa position de repos. Par contre, sur la fig. 3, qui montre la poutre de traverse 4 déformée en flexion peu après l'impact, comme décrit ci-dessus en référence à la fig. 4, sous l'effort qui charge la semelle supérieure 6 en compression $F_f$ et la fait flamber en comprimant le plot 14, la force de traction $F_1$ qui chargeait la semelle inférieure 7 dans la réalisation représentée sur la fig. 4 est encaissée par l'amortisseur visco-élastique 24. Les deux plaques d'armature centrales 25 sont donc écartées l'une de l'autre tandis que les deux plaques d'armature externes 27 et 28, dont l'une, 27, peut être fixée à la semelle inférieure 7, restent sensiblement en place, les quatre lamelles 29 étant sollicitées en cisaillement.

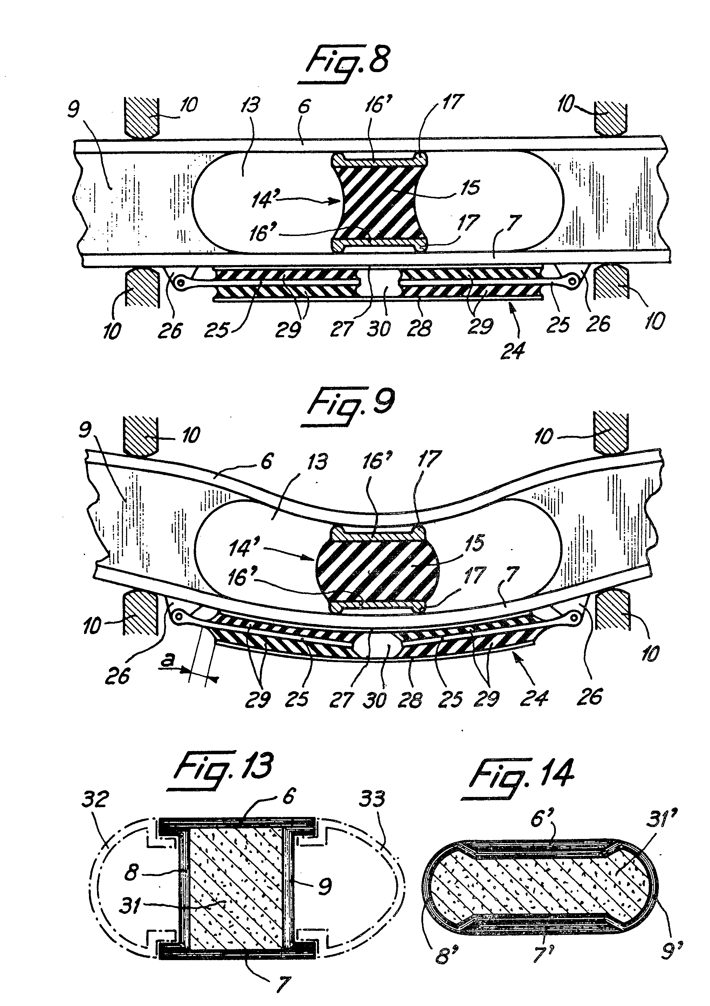

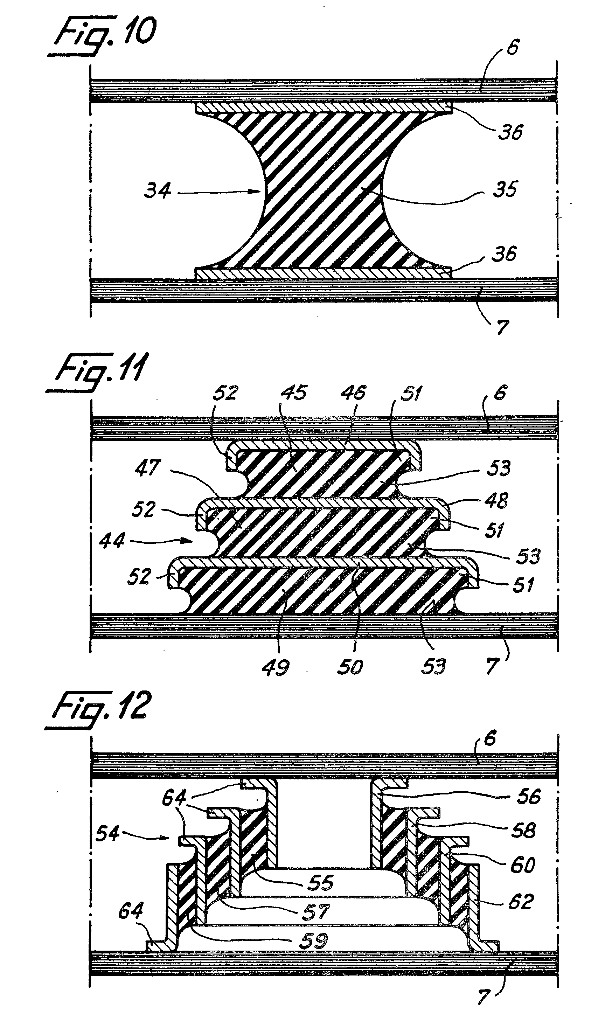

Bien entendu, un amortisseur visco-élastique 24 peut équiper une poutre de traverse telle que celle de la fig. 4, comme cela est représenté sur les fig. 8 et 9, montrant respectivement les configurations de repos et de charge à l'impact, analogues aux configurations des fig. 2 et 3. Sur la fig. 9, on remarque en particulier l'amplitude «a» de la déformation en cisaillement des lamelles 29, lorsque la poutre de traverse est déformée en flexion.

Sur les fig. 10 à 12 sont représentées trois formes de réalisation différentes de plots d'absorption d'énergie. Dans la réalisation de la fig. 10, similaire à celle représentée sur la fig. 2, le plot 34 est constitué d'un bloc massif d'élastomère 35, en forme de corps de révolution autour d'un axe perpendiculaire aux deux semelles 6 et 7 stratifiées, et dont la surface latérale est concave et délimitée, en demi-coupe axiale, par un évidement sensiblement semi-circulaire, ce bloc 35 étant solidarisé par ses deux faces planes d'extrémité supérieure et inférieure respectivement aux faces planes inférieure et supérieure respectivement de deux disques d'armature rigide supérieur et inférieur 36, eux-mêmes solidarisés respectivement par leur face plane supérieure et inférieure aux semelles supérieure 6 et inférieure 7. Lorsque ce plot 34 est déformé par la flexion de la poutre et le flambage de la semelle supérieure 6, il est chargé en compression et le bloc d'élastomère 35 se déforme en se bombant, comme cela est représenté sur les fig. 3 et 9 pour le bloc 15 dont la position de repos est représentée sur les fig. 2 et 8.

Sur la fig. 11, le plot d'absorption d'énergie 44, également d'un type chargé en compression par la flexion de la poutre et le flambage de la semelle supérieure 6, a une structure stratifiée et est constitué par un empilement alterné de trois lamelles 45, 47 et 49 d'élastomère et de trois armatures rigides 46, 48 et 50 en matériaux composites. Chaque armature 46, 48 et 50 a la forme d'un disque dont le bord est rabattu sensiblement perpendiculairement au plan de la partie centrale du disque et forme un collet 52. Chaque lamelle 45, 47 et 49 a la forme d'un corps de révolution autour d'un axe perpendiculaire aux semelles 6 et 7, et présente une partie cylindrique 51 par la surface externe de laquelle chaque lamelle 45, 47 et 49 est solidarisée dans le collet 52 et contre la face plane correspondante de la partie centrale d'une armature 46, 48 ou 50, et chaque lamelle 45, 47 et 49 présente également une partie à surface latérale concave 53 se raccordant, d'un côté, à la partie cylindrique 51, et limitée de l'autre côté par une face plane de solidarisation à une armature voisine 48 ou 50, ou à la semelle inférieure 7.

Les trois armatures 46, 48 et 50 ont la même épaisseur ou dimension axiale, mais présentent des dimensions transversales ou diamètres qui augmentent progressivement de l'armature 46, située à l'extrémité supérieure de l'empilement, et par la face plane supérieure de laquelle le plot 44 est solidarisé à la face inférieure de la semelle supérieure 6, à l'armature inférieure 50. De même, les lamelles 45, 47 et 49 ont la même épaisseur mais des diamètres qui correspondent respectivement aux diamètres internes des collets 52 des armatures 46, 48 et 50, donc qui augmentent progressivement de la lamelle supérieure 45 de l'empilement à la lamelle inférieure 49, située à l'extrémité inférieure de l'empilement, et dont la face plane inférieure, adjacente à la partie de surface externe concave 53, est solidarisée à la face plane supérieure de la semelle inférieure 7. Cette réalisation assure une meilleure longévité au plot 44 et permet de mieux contrôler ses déformations.

Sur la fig. 12, le plot d'absorption d'énergie 54 est d'un type sollicité en cisaillement lorsqu'il est déformé par la flexion de la poutre et le flambage de la semelle supérieure 6. Ce plot 54 a une structure tubulaire et télescopique, d'axe perpendiculaire aux deux semelles 6 et 7. Il est constitué par emboîtement partiel d'éléments tubulaires alternativement rigides et en caoutchouc d'élastomère à fort taux d'hystérésis. Ce plot 54 comprend quatre armatures rigides tubulaires 56, 58, 60 et 62, coaxiales et de rayons progressivement croissants, présentant chacune un collet radial externe 64 à une extrémité. Les quatre armatures rigides 56, 58, 60 et 62 sont engagées, avec un espacement radial, les unes dans les autres sur la majeure partie de leur longueur, et elles présentent leur collet 64 à leur extrémité supérieure, sauf l'armature 62 de plus grand diamètre, dont le collet 64 est à l'extrémité inférieure du plot 54. Trois couronnes en caoutchouc d'élastomère 55, 57 et 59, également de forme tubulaire, et de rayons croissant progressivement, sont disposées chacune entre deux armatures tubulaires voisines du plot 54, et adhèrent chacune respectivement par ses surfaces latérales interne et externe à la surface latérale externe de l'armature tubulaire 56, 58 ou 60 qu'elle entoure et à la surface latérale interne de l'armature tubulaire 58, 60 ou 62 par laquelle elle est entourée. Le plot 54 ainsi réalisé est solidarisé à la face inférieure de la semelle supérieure 6 par le collet 64 de l'armature supérieure 56, de plus petit diamètre, et à la face supérieure de la semelle inférieure 7 par le collet 64 de l'armature inférieure 62, de plus grand diamètre.

La coupe transversale d'une poutre de traverse telle que 4 ou 5 qui est représentée sur la fig. 13 fait clairement apparaitre la structure en caisson de cette poutre, formée par les semelles supérieure 6 et inférieure 7 stratifiées, ainsi que par les voiles stratifiés avant 8 et arrière 9, ayant chacun une section en U s'ouvrant vers l'extérieur du caisson de la poutre. Cette dernière est remplie, sauf dans sa partie centrale ajourée 13, d'un noyau 31 en un matériau synthétique de faible poids spécifique, par exemple à cellules fermées, qui augmente la rigidité de la poutre.

Afin de profiler les traverses 4 et 5, un corps avant 32, de section tranversale semi-circulaire, et un corps arrière 33, de section transversale ogivale, tous deux également réalisés en matériaux composites peuvent être solidarisés respectivement sur l'avant du voile avant 8 et sur l'arrière du voile arrière 9.

La liaison des traverses avant 4 et arrière 5 aux patins est assurée par des manchons 4' et 5' réalisés par des bandes de matériaux composites enroulées autour des patins 1 et solidarisées aux traverses 4 et 5 dans les évidements présentés par les voiles en U 8 et 9.

La fig. 14 représente en coupe transversale une variante de réalisation de traverse profilée de section ovale. Les semelles supérieure 6' et inférieure 7' stratifiées sont logées dans des évidements ouverts vers le haut et vers le bas et présentés par un caisson stratifié fermé de section ovale, dont la partie convexe vers l'avant constitue le voile avant 8', et dont la partie convexe vers l'arrière constitue le voile arrière 9', le caisson étant rempli d'un noyau 31' de matière synthétique cellulaire.

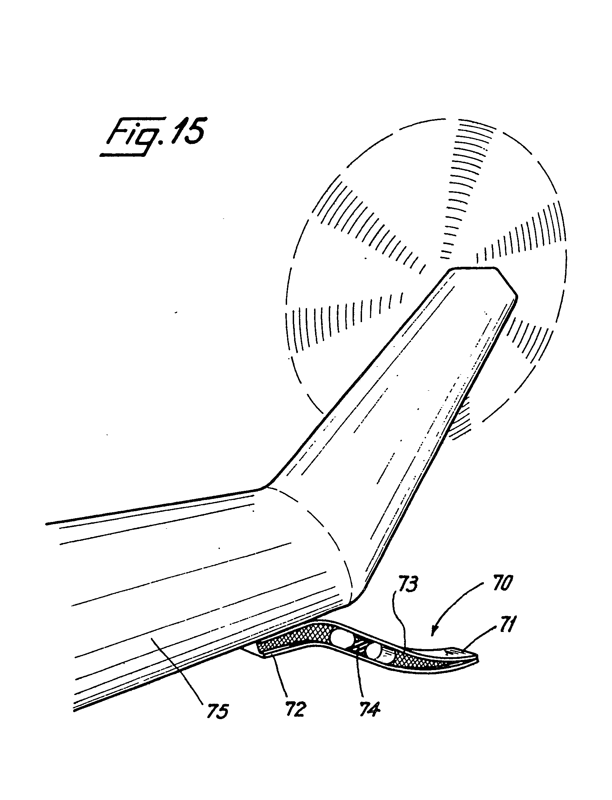

Des poutres flexibles légères telles que celles qui viennent d'être décrites peuvent également être utilisées dans la réalisation de trains à roues pour avions légers, ainsi que dans la réalisation d'une béquille arrière, comme cela est représenté sur la fig. 15.

Sur la fig. 15, une poutre 70, cintrée en forme de S, et également constituée d'un caisson stratifié comportant une semelle supérieure 71 et une semelle inférieure 72, reliées l'une à l'autre par des voiles latéraux tels que 73 ajourés dans leur partie centrale, avec un plot d'absorption d'énergie 74 logé entre les semelles 71 et 72, dans l'évidement ainsi délimité, est fixée rigidement par une extrémité sous la structure arrière 75 d'un hélicoptère. L'autre extrémité de la poutre 70, qui est amincie et telle que les semelles supérieure 71 et inférieure 72 sont pratiquement solidarisées l'une sur l'autre, est destinée à venir en contact avec le sol, lors d'atterrissages trop cabrés, afin que la poutre 70 absorbe l'énergie d'impact et en dissipe une grande partie par la déformation du plot 74, dans des conditions très similaires aux conditions de fonctionnement des poutres de traverse 4 et 5 décrites ci-dessus.

Dans les réalisations symétriques décrites ci-dessus en référence aux fig. 11 et 12, il est à noter que les lamelles déformables et les armatures rigides sont coaxiales, mais il est clair que, dans certaines applications particulières, il peut être intéressant de donner au plot d'absorption d'énergie une structure dissymétrique.

De manière analogue, le caisson représenté sur la fig. 13 comporte des voiles 8 et 9, dont la base du U est perpendiculaire aux semelles 6 et 7, mais il est clair que la base du U pourrait être inclinée par rapport aux semelles 6 et 7.

## Revendications

1. Poutre flexible en matériaux composites et à forte absorption d'énergie, ayant sensiblement la forme d'un caisson allongé de structure stratifiée comprenant deux semelles rigides (6, 7) reliées par deux voiles (8, 9), caractérisée en ce qu'elle comprend de plus au moins un plot déformable d'absorption d'énergie (14) disposé entre les deux semelles (6, 7) et comportant au moins un bloc (15) d'un matériau élastomère à forte rémanence de déformation, le plot (14) étant destiné, lors d'une déformation en flexion de la poutre dans une direction sensiblement perpendiculaire aux semelles (6, 7), à absorber l'énergie de déformation en flambage de celle (6) des semelles qui est sollicitée en compression, en prenant appui sur l'autre semelle (7) sollicitée en traction, et à contrôler le flambage de la semelle comprimée (6), les caractéristiques d'amortissement du plot (14) entraînant, au retour de la poutre en position normale, une restitution partielle de l'énergie absorbée.

2. Poutre selon la revendication 1, caractérisée en ce que l'un au moins des plots (14) est disposé entre deux ajours (13) ménagés chacun dans l'un des voiles (8, 9) de la poutre et en regard l'un de l'autre.

3. Poutre selon l'une des revendications 1 et 2, caractérisée en ce que l'un au moins des plots (14) est disposé dans la partie centrale de la poutre.

4. Poutre selon l'une des revendications 1 à 3, caractérisée en ce que l'un au moins des plots (14) présente une caractéristique de raideur croissante en fonction de sa déformation.

5. Poutre selon l'une des revendications 1 à 4, caractérisée en ce que l'un au moins des plots (14) comprend au moins deux armatures rigides (16), métalliques ou en matériaux composites, dont l'une au moins est solidarisée à l'une des semelles, et entre lesquelles est monté au moins un élément en élastomère (15) à fort taux d'hystérésis.

6. Poutre selon l'une des revendications 1 à 5, caractérisée en ce que l'un au moins des plots (14, 14', 34, 44) est déformé par une sollicitation en compression.

7. Poutre selon l'une des revendications 1 à 5, caractérisée en ce que l'un au moins des plots (54) est déformé par une sollicitation en cisaillement.

8. Poutre selon la revendication 6, caractérisée en ce que l'un au moins des plots (14, 14', 34) est constitué par un bloc de matériau élastomère (15, 35) en forme de corps de révolution autour d'un axe sensiblement perpendiculaire aux semelles (6, 7) et dont les deux faces d'extrémité adhèrent chacune à l'une de deux armatures (16, 16', 36) elles-mêmes solidaires chacune de l'une des deux semelles (6, 7), la face latérale du corps de révolution (15, 35) étant concave.

9. Poutre selon l'une des revendications 6 et 7, caractérisée en ce que l'un au moins des plots (44, 54) est de structure lamifiée.

10. Poutre selon la revendication 9, telle que rattachée à la revendication 6, caractérisée en ce que l'un au moins des plots (44) est constitué par un empilement alterné de lamelles de matériau élastomère (45, 47, 49) et d'armatures (46, 48, 50), les lamelles ayant chacune la forme d'un corps de révolution autour d'un axe sensiblement perpendiculaire aux semelles (6, 7) et étant sensiblement coaxiales par rapport à cet axe, chaque lamelle (45, 47, 49) adhérant par ses deux faces d'extrémité à deux armatures voisines (46, 48, 50) de l'empilement ou à une semelle (7) et à l'armature voisine (50) de l'empilement, et la face latérale de chaque lamelle étant au moins partiellement concave (53).

11. Poutre selon la revendication 10, caractérisée en ce que les différentes lamelles (45, 47, 49) présentent les mêmes dimensions axiales et/ou transversales.

12. Poutre selon la revendication 10, caractérisée en ce que les différentes lamelles (45, 47, 49) présentent des dimensions axiales et/ou transversales qui varient progressivement d'une extrémité à l'autre de l'empilement.

13. Poutre selon la revendication 12, caractérisée en ce que la face latérale de chaque lamelle (45, 47, 49) présente une partie cylindrique (51) entourée par un collet (52) d'une armature (46, 48, 50) et adhèrant à ce collet (52), ainsi qu'une partie concave (53) adjacente à la face d'extrémité adhèrant à une armature voisine (48, 50) ou à une semelle (7).

14. Poutre selon la revendication 9, telle que rattachée à la revendication 7, caractérisée en ce que l'un au moins des plots (54) présente une structure tubulaire d'axe sensiblement perpendiculaire aux semelles (6, 7) et comprend plusieurs armatures tubulaires (56, 58, 60, 62) qui, prises deux à deux successivement, sont partiellement engagées l'une dans l'autre, chaque armature (56, 58, 60, 62) étant reliée à l'armature dans laquelle elle est engagée et/ou à l'armature qui est engagée dans elle par une couronne de matériau élastomère (55, 57, 59) adhèrant par ses faces interne et externe aux surfaces latérales respectivement externe et interne des deux armatures voisines correspondantes.

15. Poutre selon l'une des revendications 1 à 14, caractérisée en ce qu'elle comprend de plus au moins un amortisseur visco-élastique (24), monté sur la face externe de la semelle (7) sollicitée en traction par la déformation en flexion de la poutre, et dont l'amortissement s'ajoute à celui qui est assuré par chaque plot d'absorption d'énergie (14, 14', 34, 44, 54).

16. Poutre selon la revendication 15, caractérisée en ce qu'un amortisseur visco-élastique (24) au moins comprend deux ensembles lamifiés disposés symétriquement de part et d'autre d'un plot (14, 14') et comportant chacun au moins une armature interne (25) solidarisée, par son extrémité la plus éloignée du plot (14, 14'), à la semelle sollicitée en traction (7) et reliée à chacune de deux armatures externes (27, 28), entre lesquelles elle s'étend, par une lamelle (29) de matériau élastomère sollicitée en cisaillement par les déformations en flexion de la poutre, les armatures externes (27, 28) des deux ensembles lamifiés étant rigidement reliées les unes aux autres.

17. Train d'atterrissage pour aérodyne, du type comprenant des organes de contact avec le sol, tels que des roues et/ou des patins (1) et/ou des skis, reliés au fuselage (12) de l'aérodyne par au moins une jambe d'atterrisseur, caractérisé en ce que l'une au moins des jambes comprend au moins une poutre selon l'une des revendications 1 à 16.

18. Train d'atterrissage selon la revendication 17, pour aérodyne à voilure tournante, tel qu'un hélicoptère, dont les organes de contact avec le sol sont deux patins (1) latéraux, dont les jambes d'atterrisseur sont constituées par une traverse avant (4) et une traverse arrière (5), reliant les deux patins (1) l'un à l'autre, et ayant chacune la forme d'un arceau sensiblement en forme de U renversé dont la base est solidarisée à la structure du fuselage (12) par deux organes de liaison (10) disposés de part et d'autre de la partie centrale de la base, caractérisé en ce que chacune des deux traverses (4, 5) est constituée par une poutre selon l'une des revendications 1 à 16, dont les deux semelles (6, 7) sont sensiblement à l'aplomb l'une au-dessus de l'autre, la semelle supérieure (6) étant comprimée à l'atterrissage et déformée en flambage entre les deux organes de liaison (10) au fuselage (12).

19. Train d'atterrissage selon la revendication 18, caractérisé en ce que les deux voiles (8, 9) de chaque traverse (4, 5) sont ajourés (13) dans la partie centrale de la traverse (4, 5), laquelle comporte un unique plot d'absorption d'énergie (14, 14') disposé entre les deux organes (10) de liaison au fuselage (12).

20. Train d'atterrissage selon l'une des revendications 18 et 19, caractérisé en ce que les voiles (8, 9) d'une traverse (4, 5) au moins ont une section transversale en forme de U s'ouvrant vers l'extérieur de la traverse (4, 5), et dont la base est sensiblement perpendiculaire aux deux semelles (6, 7).

21. Train d'atterrissage selon la revendication 20, caractérisé en ce qu'au moins une traverse (4, 5) comprend un corps avant (32) de section transversale sensiblement semi-circulaire et un corps arrière (33) de section transversale ogivale, qui sont respectivement solidarisés contre le voile avant (8) et contre le voile arrière (9) de la travese, afin de lui donner une section profilée.

22. Train d'atterrissage selon l'une des revendications 18 et 19, caractérisé en ce qu'au moins une traverse présente une section transversale sensiblement ovale délimitée par un voile avant convexe vers l'avant (8') et un voile arrière convexe vers l'arrière (9') de la traverse, et qui se raccordent respectivement aux bords avant et aux bords arrière des deux semelles (6', 7').

23. Train d'atterrissage selon l'une des revendications 18 à 22, caractérisé en ce que chaque traverse (4, 5) est solidaire par chacune de ses deux extrémités (4', 5') de l'un des deux patins (1) de structure stratifiée et réalisés en matériaux composites.

24. Béquille de protection de la structure arrière d'un aérodyne, en particulier d'un hélicoptère, comprenant un organe allongé dont une extrémité est destinée à être fixée à la structure arrière de l'aérodyne, et dont l'autre extrémité est libre et cintrée, et est destinée à entrer en contact avec le sol et/ou à supporter un organe de contact avec le sol, lors des atterrissages trop cabrés de l'aérodyne, caractérisée en ce que l'organe allongé (70) comprend au moins une poutre selon l'une des revendications 1 à 16.

Patentansprüche

1. Biegsamer Träger aus Verbundwerkstoff und mit starker Absorption von Energie, der im wesentlichen die Form eines länglichen, in Schichtanordnung ausgeführten Kastens aufweist, der zwei starre Gurte (6, 7) umfasst, die durch zwei Verkleidungen (8, 9) verbunden werden, dadurch gekennzeichnet, dass er ferner mindestens ein verformbares Energieabsorptionselement (14) umfasst, das zwischen den beiden Gurten (6, 7) liegt und mindestens einen Block (15) aus elastomerem Werkstoff mit starker Verformungsremanenz umfasst, wobei das Energieabsorptionselement (14) dazu dient, bei einer Biegeverformung des Trägers in einer im wesentlichen senkrecht zu den Gurten (6, 7) verlaufenden Richtung die Energie der Knickungsverformung jenes (6) der Gurte, der unter Druckeinwirkung steht, in der Weise zu absorbieren, dass es sich auf den anderen (7) auf Zug beanspruchten Gurt abstützt, und ferner dazu die Knickung des unter Druck stehenden Gurts (6) zu steuern, wobei die Stossdämpfungseigenschaften des Energieabsorptionselements (14) bei der Rückkehr des Trägers in Normalposition eine teilweise Wiedergewinnung der absorbierten Energie herbeiführen.

2. Träger nach Anspruch 1, dadurch gekennzeichnet, dass mindestens eines der Energieabsorptionselemente (14) zwischen zwei Öffnungen (13) angeordnet ist, die jeweils in eine der beiden Verkleidungen (8, 9) des Trägers vorgesehen sind und die einander gegenüberliegen.

3. Träger nach einem der Ansprüche 1 und 2, dadurch gekennzeichnet, dass mindestens eines der Energieabsorptionselemente (14) im mittigen Abschnitt des Trägers angeordnet ist.

4. Träger nach einem der Ansprüche 1 bis 3, dadurch gekennzeichnet, dass mindestens eines der Energieabsorptionselemente (14) eine mit seiner Verformung zunehmende Steifigkeit aufweist.

5. Träger nach einem der Ansprüche 1 bis 4, dadurch gekennzeichnet, dass mindestens eines der Energieabsorptionselemente (14) mindestens zwei starre Beschläge (16) aufweist, die aus Metall oder Verbundwerkstoff bestehen, und wovon mindestens einer fest mit einem der Gurte verbunden ist und zwischen welchen mindestens ein Elastomerelement (15) mit starkem Hysteresewert befestigt ist.

6. Träger nach einem der Ansprüche 1 bis 5, dadurch gekennzeichnet, dass mindestens eines der Energieabsorptionselemente (14, 14', 34, 44) durch eine Druckeinwirkung verformt wird.

7. Träger nach einem der Ansprüche 1 bis 5, dadurch gekennzeichnet, dass mindestens eines der Energieabsorptionselemente (54) durch eine Scherbeanspruchung verformt wird.

8. Träger nach Anspruch 6, dadurch gekennzeichnet, dass mindestens eines der Energieabsorptionselemente (14, 14', 34) aus einem Block (15, 35) aus elastomerem Werkstoff besteht, der als Rotationskörper um eine im wesentlichen senkrecht zu den Gurten (6, 7) verlaufende Achse ausgebildet ist, und dessen beide Aussenseiten jeweils an einem der beiden Beschläge (16, 16', 36) haften, die ihrerseits jeweils mit einem der beiden Gurte (6, 7) fest verbunden sind, wobei die Seitenfläche des Rotationskörpers (15, 35) konkav verläuft.

9. Träger nach einem der Ansprüche 6 und 7, dadurch gekennzeichnet, dass mindestens eines der Energieabsorptionselemente (44, 54) einen Schichtaufbau aufweist.

10. Träger nach Anspruch 9, unter Rückbeziehung desselben auf Anspruch 6, dadurch gekennzeichnet, dass mindestens eines der Energieabsorptionselemente (44) aus einer abwechselnden Schichtung aus Blättchen (45, 47, 49) aus elastomerem Werkstoff und Beschlägen (46, 48 50) besteht, wobei die Blättchen jeweils die Gestalt eines Rotationskörpers um eine im wesentlichen senkrecht zu den Gurten (6, 7) liegende Achse aufweisen und im wesentlichen koaxial zu dieser Achse verlaufen, jedes Blättchen (45, 47, 49) mit seinen beiden Aussenseiten mit den beiden benachbarten Beschlägen (46, 48, 50) der Schichtung oder mit einem Gurt (7) und dem benachbarten Beschlag (50) der Schichtung verhaftet ist, und die Seitenfläche eines jeden Blättchens mindestens teilweise konkav verläuft (53).

11. Träger nach Anspruch 10, dadurch gekennzeichnet, dass die verschiedenen Blättchen (45, 47, 49) die gleichen Abmessungen in Axialrichtung und/oder in Querrichtung aufweisen.

12. Träger nach Anspruch 10, dadurch gekennzeichnet, dass die verschiedenen Blättchen (45, 47, 49) Messungen in Axialrichtung und/oder in Querrichtung aufweisen, die sich allmählich von einem Ende der Schichtung zum anderen verändern.

13. Träger nach Anspruch 12, dadurch gekennzeichnet, dass die Seitenfläche eines jeden Blättchens (45, 47, 49) einen zylindrischen Abschnitt (51) aufweist, der von einem Kragen (52) eines Beschlags (46, 48, 50) umgeben ist und der an diesem Kragen (52) haftet, sowie einen der Endfläche benachbarten konkaven Abschnitt (53), der an einem benachbarten Beschlag (48, 50) oder an einem Gurt (7) haftet.

14. Träger nach Anspruch 9, unter dessen Rückbeziehung auf Anspruch 7, dadurch gekennzeichnet, dass mindestens eines der Energieabsorptionselemente (54) einen rohrförmigen Aufbau mit einer Achse aufweist, die im wesentlichen senkrecht zu den Gurten (6, 7) liegt und mehrere rohrförmige Beschläge (56, 58, 60 62) aufweist, von denen jeweils zwei aufeinanderfolgende teilweise ineinandergreifen, wobei jeder Beschlag (56, 58, 60, 62) mit einem Beschlag verbunden ist, in den er eingreift und/oder mit dem Beschlag, der mit ihm über einen Kranz (55, 57, 59) aus elastomerem Werkstoff verbunden ist, der mit seiner Innenfläche und seiner Aussenfläche jeweils an den inneren und äusseren Seitenflächen der beiden benachbarten Beschläge haftet.

15. Träger nach einem der Ansprüche 1 bis 14, dadurch gekennzeichnet, dass er mindestens einen viskoelastischen Stossdämpfer (24) umfasst, der an der Aussenseite des Gurts (7) befestigt ist und bei der Biegeverformung des Trägers auf Zug beansprucht wird, und dessen Dämpfungswirkung sich zu jener addiert, die durch jedes Energieabsorptionselement (14, 14', 34, 44, 54) gewährleistet wird.

16. Träger nach Anspruch 15, dadurch gekennzeichnet, dass mindestens einer der viskoelastischen Stossdämpfer (24) zwei Schichtanordnungen umfasst, die symmetrisch beiderseits eines Energieabsorptionselements (14, 14') liegen und von denen jede mindestens eine innere Armierung (25) aufweist, die mit ihrem am weitesten vom Energieabsorptionselement (14, 14') entfernten Ende fest mit dem auf Zug beanspruchten Gurt (7) befestigt und mit den beiden äusseren Beschlägen (27, 28) verbunden ist, zwischen welchen sie sich mittels eines Blättchens (29) aus elastomerem Werkstoff erstreckt, der durch die Biegeverformungen des Trägers auf Scherung beansprucht wird, wobei die äusseren Beschläge (27, 28) der beiden Schichtanordnungen starr miteinander verbunden sind.

17. Fahrgestell für ein Luftfahrzeug einer Bauart, die Boden-Kontaktglieder aufweist, wie beispielsweise Räder und/oder Schienen (1) und/oder Skier, die mit dem Rumpf (12) des Luftfahrzeugs mittels mindestens eines Landebeins verbunden sind, dadurch gekennzeichnet, dass mindestens eines der Landebeine mindestens einen Träger nach den Ansprüchen 1 bis 16 aufweist.

18. Fahrgestell nach Anspruch 17 für ein Luftfahrzeug mit umlaufender Tragfläche, wie beispielsweise für einen Helikopter, dessen Boden-Kontaktglieder zwei seitliche Schienen (1) sind, und dessen Landebeine durch eine vordere Traverse (4) und eine hintere Traverse (5) gebildet werden, die die beiden Schienen (1) miteinander verbinden, und wovon jede die Form eines Bogens aufweist, der im wesentlichen als umgestürztes U ausgebildet ist, dessen Basis fest mit einem Rumpfaufbau (12) über zwei Verbindungsglieder (10) verbunden ist, die beiderseits des mittigen Abschnitts der Basis liegen, dadurch gekennzeichnet, dass jede der beiden Traversen (4, 5) durch einen Träger nach einem der Ansprüche 1 bis 16 gebildet wird, dessen beiden Gurte (6, 7) im wesentlichen senkrecht übereinander liegen, wobei der obere Gurt (6) beim Laden unter Druck gesetzt wird und eine Knickverformung zwischen den beiden Verbindungselementen (10) zum Rumpfaufbau (12) erfährt.

19. Fahrgestell nach Anspruch 18, dadurch gekennzeichnet, dass die beiden Verkleidungen (8, 9) jeder Traverse (4, 5) im mittleren Abschnitt (13) der Traverse (4, 5) durchbrochen sind, der ein einziges Energieabsorptionselement (14, 14') trägt, das zwischen den beiden Verbindungsgliedern (10) zum Rumpfaufbau (12) angeordnet ist.

21 0143690 22

20. Fahrgestell nach einem der Ansprüche 18 und 19, dadurch gekennzeichnet, dass die Verkleidungen (8, 9) mindestens einer Traverse (4, 5) einen Querschnitt in Gestalt eines U aufweisen, das sich gegen das Äussere der Traverse (4, 5) hin öffnet, und dessen Basis im wesentlichen senkrecht zu den beiden Gurten (6, 7) liegt.

21. Fahrgestell nach Anspruch 20, dadurch gekennzeichnet, dass mindestens eine Traverse (4, 5) ein Vorderteil (32) mit einem im wesentlichen habkreisförmigen Querschnitt und ein Rückteil (33) mit spitzbogenförmigem Querschnitt aufweist, die jeweils fest gegen der vorderen Abdeckung (8) und gegen der hinteren Abdeckung (9) der Traverse verbunden sind, um dieser eine profilierte Querschnittsform zu geben.

22. Fahrgestell nach einem der Ansprüche 18 und 19, dadurch gekennzeichnet, dass mindestens eine Traverse einen im wesentlichen ovalen Querschnitt aufweist, der durch eine vordere, konvex nach dem Vorderteil der Traverse gerichtete Verkleidung (8') und eine hintere, konvex nach dem Hinterteil der Traverse gerichtete Verkleidung (9') begrenzt wird, wobei sich die Verkleidungen bis jeweils an die Vorderkanten und an die Hinterkanten der beiden Gurte (6', 7') anschliessen.

23. Fahrgestell nach einem der Ansprüche 18 bis 22, dadurch gekennzeichnet, dass jede Traverse (4, 5) über jedes seiner beiden Enden (4', 5') mit einer der beiden Schienen (1) mit Schichtaufbau fest verbunden ist und aus Verbundwerkstoffen besteht.

24. Schutzsporn des Heckaufbaus eines Luftfahrzeugs, insbesondere eines Helikopters, mit einem länglichen Glied, dessen eines Ende zur Befestigung am Heckaufbau des Luftfahrzeugs bestimmt ist, und dessen anderes Ende frei und abgerundet ist und dazu dient, in Bodenkontakt zu gelangen und/oder ein Bodenkontaktelement zu tragen, bei zu stark aufgebäumten Landungen des Luftfahrzeugs, dadurch gekennzeichnet, dass das längliche Glied (70) mindestens einen Träger nach einem der Ansprüche 1 bis 16 aufweist.

**Claims**

1. A flexible girder made of composite materials and with high energy absorption, having substantially the shape of an elongate box of laminated structure comprising two rigid flanges (6, 7) connected by two webs (8, 9), characterized in that it comprises in addition at least one deformable energy-absorbing block unit (14) arranged between the two flanges (6, 7) and comprising at least one block (14) of an elastomeric material with high deformation remanence, the block unit (14) being intended, when the girder is deformed in flexion in a direction substantially perpendicular to the flanges (6, 7) to absorb the buckling deformation energy of the flange (6) which is subjected to compressive stress, by resting on the other flange (7) which is subjected to tensile stress, and to control the buckling of the compressed flange (6), the absorption characteristic of the block (14) bringing about partial restitution of the energy absorbed, when the girder returns to the normal position.

2. A girder according to claim 1, characterized in that at least one of the block units (14) is arranged between two aligned apertures (13), respectively provided in the webs (8, 9) of the girder facing each other.

3. A girder according to claim 1 or 2, characterized in that at least one of the block units (14) is arranged in the central portion of the girder.

4. A girder according to claims 1 to 3, characterized in that at least one of the block units (14) has a stiffness characteristic which increases as a function of its deformation.

5. A girder according to claims 1 to 4, characterized in that at least one of the block units (14) comprises at least two rigid reinforcements (16), of metal or of composite materials, of which at least one is solidly connected to one of the flanges, and between which there is mounted at least one elastomeric element (15), with a high rate of hysteresis.

6. A girder according to claims 1 to 5, characterized in that at least one of the block units (14, 14', 34, 44) is deformed by a compressive stress.

7. A girder according to claims 1 to 5, characterized in that at least one of the block units (54) is deformed by a shearing stress.

8. A girder according to claim 6, characterized in that at least one of the block units (14, 14', 34) is composed of a block of elastomeric material (15, 35) in the form of a body of revolution about an axis substantially perpendicular to the flanges (6, 7) and the two end faces of which each adhere to one of two reinforcements (16, 16', 36) themselves each solidly connected with one of the two flanges (6, 7) the lateral face of the body of revolution (15, 35) being concave.

9. A girder according to claims 6 and 7, characterized in that at least one of the block units (44, 54) is of a laminated structure.

10. A girder according to claim 9, such as attached to claim 6, characterized in that at least one of the block units (44) is composed of an alternating stack of thin plates of elastomeric material (45, 47, 49) and of reinforcements (46, 48, 50) the thin plates each having the shape of a body of revolution about an axis substantially perpendicular to the flanges (6, 7) and being substantially coaxial with respect to said axis, each thin plate (45, 47, 49) adhering by its two end faces to two adjacent reinforcements (46, 48, 50) of the stack or to a flange (7) and to the adjacent reinforcement (50) of the stack, and the lateral face of each thin plate being at least partially concave (53).

11. A girder according to claim 10, characterized in that the different thin plates (45, 47, 49) have the same axial and/or transverse dimensions.

12. A girder according to claim 10, characterized in that the different thin plates (45, 47, 49) have axial and/or transverse dimensions which vary progressively from one end of the stack to the other.

13. A girder according to claim 12, characterized in that the lateral face of each thin plate (45, 47, 49) has a cylindrical portion (51) surrounded by a collar (52) of a reinforcement (46, 48, 50) and adhering to the collar (52), as well as a concave portion (53) adjacent to the end face adhering to an adjacent reinforcement (48, 50) or to a flange (7).

14. A girder according to claim 9 such as attached to claim 7, characterized in that at least one of the block units (54) has a tubular structure with an axis substantially perpendicular to the flanges (6, 7) and comprises several tubular reinforcements (56, 58, 60, 62) which fit partially one inside the other taken successively in twos, each reinforcement (56, 58, 60, 62) being joined to the reinforcement inside which it fits and/or to the reinforcement which fits inside it, by an annulus of elastomeric material (55, 57, 59) adhering by its inner and outer faces to the external and internal surfaces respectively of the two corresponding adjacent reinforcements.

15. A girder according to claims 1 to 14, characterized in that it comprises in addition at least one viscoelastic shock-absorber (24) mounted on the outer face of the flange (7) which is subjected to tensile stress by the deformation in flexion of the girder, and the damping of which is added to that produced by each energy-absorbing block unit (14, 14', 34, 44, 54).

16. A girder according to claim 15, characterized in that at least one viscoelastic shock-absorber (24) comprises at least two laminated assemblies arranged symmetrically on either side of a block unit (14, 14') and each comprising at least one internal reinforcement (25) solidly connected, by its end furthest from the block unit (14, 14') to the flange which is subjected to tensile stress (7) and connected to each of two external reinforcements (27, 28) between which it extends, by a thin plate (29) of elastomeric material subjected to shearing stress by the deformation in flexion of the girder, the external reinforcements (27, 28) of the two laminated assemblies being rigidly connected to each other.

17. A landing gear for an aircraft, of the type comprising members intended to come into contact with the ground, such as at least one of the group comprising wheels and/or skids (1) and or skis, connected to the fuselage (12) of the aircraft by at least one landing gear strut, characterized in that at least one of the struts comprises at least one girder according to one of claims 1 to 16.

18. A landing gear according to claim 17 for an aircraft with at least one rotor, such as a helicopter, in which the members coming into contact with the ground re two lateral skids (1), the landing gear struts of which are formed by a front crosspiece (4) and a rear crosspiece (5), connecting the two skids (1) to each other, and each being in the form of a bow substantially in an inverted U-shape, the base of which is firmly secured to the structure of the fuselage (12) by two connecting members (10) arranged on either side of the central portion of the base, characterized in that each of the two crosspieces (4, 5) is formed by a girder according to one of claims 1 to 16 whose rigid flanges (6, 7) are substantially vertically one above the other, the upper flange (6) being compressed on landing and deformed by buckling between the two connecting members (10), to the fuselage (12).

19. A landing gear according to claim 18, characterized in that the two webs (8, 9) of each crosspiece (4, 5) are apertured (13) in the central portion of the crosspiece (4, 5) which contains a single energy-absorbing block unit (14, 14') arranged between the two members (10) connecting it to the fuselage (12).

20. A landing gear according to claim 18 or 19, characterized in that the webs (8, 9) of at least one crosspiece (4, 5) form recesses of U-shaped cross-section opening towards the outside of the crosspiece (4, 5) and the base of each recess is substantially perpendicular to the two flanges (6, 7).

21. A landing gear according to claim 20, characterized in that at least one crosspiece (4, 5) comprises a front body (32) of substantially semicircular cross section and a rear body (33) of ogival cross section which are fixed respectively against the front web (8) and against the rear web (9) of the crosspiece in order to give it a profiled section.

22. A landing gear according to one of claims 18 and 19, characterized in that at least one crosspiece has a substantially oval cross section defined by a front web (8') which is convex towards the front and a rear web (9') which is convex towards the rear of the crosspiece, and which are connected respectively with the front edges and the rear edges (6', 7') of the two flanges.

23. A landing gear according to one of claims 18 to 22, characterized in that each crosspiece (4, 5) is solidly connected by each of its ends (4', 5') with one of the two skids (1) which are of laminated structure and made of composite materials.

24. A tail skid for the protection of the rear structure of an aircraft, in particular of a helicopter, comprising an elongate member, one end of which is intended to be fixed to the rear structure of the aircraft and the other end of which is free and curved, and is intended to come into contact with the ground, during landings when the aircraft is in an excessively nose-up attitude, characterized in that the elongate member (70) comprises at least one girder according to one of claims 1 to 16.

0143690

Fig.1

Fig.2

Fig.3

15

0143690

_Fig.4_

_Fig.5_

_Fig.6_

_Fig.7_

17

0143690

*Fig.8*

*Fig.9*

*Fig.13*

*Fig.14*

19

0143690

## Fig.10

## Fig.11

## Fig.12

_Fig.15_